# EUROPÄISCHE PATENTSCHRIFT

(11) **EP 3 079 959 B1**
(45) Veröffentlichungstag und Bekanntmachung des Hinweises auf die Patenterteilung: **01.11.2017**
(21) Anmeldenummer: 14805507.2
(22) Anmeldetag: 17.11.2014
(51) Int. Cl.: B60W 30/095

(54) **KRAFTFAHRZEUG MIT KOLLISIONSWARNUNG**
MOTOR VEHICLE WITH COLLISION WARNING
VÉHICULE ÉQUIPÉ D'UN DISPOSITIF D'AVERTISSEMENT DE RISQUE DE COLLISION

(30) Priorität: 13.12.2013 DE 102013225906
(43) Veröffentlichungstag der Anmeldung: 19.10.2016
(73) Patentinhaber: Volkswagen Aktiengesellschaft, 38440 Wolfsburg (DE)
(72) Erfinder: MAUS, Benjamin, 40215 Düsseldorf (DE); SCHROVEN, Frank, 38302 Wolfenbüttel (DE); JUNG, Tobias, 38100 Braunschweig (DE); MÄGE, Thomas, 12049 Berlin (DE); KUPKA, Christopher, 13503 Berlin (DE); RIEDEL, Jan Malte, 10717 Berlin (DE)
(86) Internationale Anmeldenummer: PCT/EP2014/074772
(87) Internationale Veröffentlichungsnummer: WO 2015/086267

(56) Entgegenhaltungen:
- EP-A1- 1 559 607
- DE-A1- 19 510 910
- US-A1- 2004 102 901

## Beschreibung

Die Erfindung betrifft ein Kraftfahrzeug, in welchem ein Auslösesignal erzeugt wird, falls eine mögliche Kollision mit einem vorausfahrenden Fremdfahrzeug erkannt wird. Zu der Erfindung gehört auch ein Verfahren zum Betreiben des Kraftfahrzeugs, um in dem Kraftfahrzeug eine mögliche Kollision mit dem vorausfahrenden Fremdfahrzeug zu signalisieren.

Kollisionswarnsysteme weisen in Kraftfahrzeugen heutzutage den folgenden prinzipiellen Aufbau auf. Eine Umfeldsensorik erfasst eine Verzögerungsbeschleunigung eines dem Kraftfahrzeug vorausfahrenden Fremdfahrzeugs. Die Verzögerungsbeschleunigung gibt an, wie stark das Fremdfahrzeug gerade abgebremst wird. Anhand der Verzögerungsbeschleunigung sowie Abstand und Relativgeschwindigkeit kann dann ermittelt werden, wie stark das eigene Kraftfahrzeug, optional unter Berücksichtigung einer nicht konstanten Fahrerreaktionszeit, mindestens bremsen muss, um die Kollision mit dem Fremdfahrzeug zu vermeiden. Dieser durch das Bremsen zu erzeugende Beschleunigungswert wird als Vermeidungsbeschleunigung bezeichnet. Eine Steuereinrichtung, beispielsweise ein Steuergerät, überprüft dann, ob die ermittelte Vermeidungsbeschleunigung ein vorbestimmtes Gefahrenkriterium erfüllt. Das Gefahrenkriterium kann beispielsweise besagen, dass die Vermeidungsbeschleunigung derart groß ist, dass sie außerhalb eines vorbestimmten Komfortbereich hinausgeht, also ein Wertintervall für Beschleunigungswerte, wie sie bei gefahrlosen Fahrmanövern, wie beispielsweise dem Überholen oder Abbiegen, üblich sind.

Bei Kollisionswarnsystemen ist aber der Umgang mit verzögernden, abbremsenden vorausfahrenden Fremdfahrzeugen besonders herausfordernd. In der Regel muss bei einer gerade beginnenden Verzögerung oder Abbremsung des vorausfahrenden Fremdfahrzeugs auf der Grundlage der gerade erkannten Verzögerungsbeschleunigung extrapoliert oder prädiziert werden, wie sich das Fremdfahrzeug in den nächsten Sekunden verhalten wird. Hierbei führen dann kurze, verhältnismäßig starke Bremsungen des Fremdfahrzeugs zu unterwünschten und nicht verständlichen Warnungen des Fahrers des eigenen Kraftfahrzeugs. Bremst beispielsweise das Fremdfahrzeug auf einer Autobahn kurz an, um dann in eine Ausfahrt abzubiegen, so besteht hier kein Grund, den Fahrer des eigenen Kraftfahrzeugs durch ein Warnsignal abzulenken. Auch eine Bremsung eines Fremdfahrzeugs, um ein anderes vorausfahrendes Fahrzeug einscheren zu lassen, ist in der Regel nur sehr kurz. Danach rollt das Fremdfahrzeug ungebremst weiter und eine Warnung des Fahrers des eigenen Kraftfahrzeugs ist unnötig. Um im eigenen Kraftfahrzeug eine Fehlauslösung der Kollisionswarnung zu vermeiden, kann bei einem Kollisionswarnsystem der Einfluss der erfassten Verzögerungsbeschleunigung des Fremdfahrzeugs reduziert werden, indem man beispielsweise Schwellenwerte entsprechend hoch setzt, die erst überschritten werden müssen, damit das Kollisionswarnsystem überhaupt aktiv wird, oder es kann die erfasste Verzögerungsbeschleunigung mit einem Faktor, der kleiner als 1 ist, multipliziert und damit abgeschwächt werden. Hierdurch entsteht aber ein Unternutzen der Prädiktionsfähigkeit des Kollisionswarnsystems, eventuell warnt sogar das Kollisionswarnsystem unerwünscht spät.

Aus der DE 699 26 298 T2 ist ein progressives Bremsleuchtenverfahren bekannt, bei welchem die Leuchtintensität eines Bremslichts des eigenen Kraftfahrzeugs in Abhängigkeit von einer Verzögerungsbeschleunigung des eigenen Kraftfahrzeugs während eines Bremsvorgangs eingeschaltet wird.

Aus der GB 2462684 A ist ein Kraftfahrzeug bekannt, bei welchem ein Bremslicht mehrere Lampen umfasst, wobei die Anzahl der bei einem Bremsvorgang leuchtenden Lampen in Abhängigkeit von einer Winkelstellung des Bremspedals eingestellt wird.

Aus der WO 00/78571 A1 ist ein Kraftfahrzeug bekannt, bei welchem zusätzlich zu den Bremsleuchten noch eine weitere, andersfarbige Rückleuchte bereitgestellt ist, die eingeschaltet wird, falls während eines Bremsvorgangs ein vorbestimmtes Gefahrenkriterium erfüllt ist. Das Gefahrenkriterium kann beispielsweise einen Schwellenwert für einen Geschwindigkeitsabbau vorgeben. Der Geschwindigkeitsabbau ist definiert als eine durch den aktuellen Bremsvorgang insgesamt bis zum aktuellen Zeitpunkt bewirkte Reduktion einer Fahrgeschwindigkeit des Kraftfahrzeugs.

Aus der gattungsgemäßen US 2004 0102901 A1 ist zudem Verfahren zum Signalisieren einer möglichen Kollision bekannt, bei dem über eine geeignete Sensorik die Verzögerung eines vorausfahrenden Fahrzeugs erfasst wird. Ein Signal für die Kollisionsgefahr wird ermittelt. In Abhängigkeit vom Signal und der entsprechenden Gefahrensituation erfolgt die Erzeugung eines Auslösesignals.

Der Erfindung liegt die Aufgabe zugrunde, in einem Kraftfahrzeug eine mögliche Kollision mit einem vorausfahrenden Fremdfahrzeug zuverlässig zu signalisieren.

Die Aufgabe wird durch die Gegenstände der unabhängigen Patentansprüche gelöst. Vorteilhafte Weiterbildungen der Erfindung ergeben sich durch die Merkmale der Unteransprüche.

Das erfindungsgemäße Verfahren bildet das eingangs beschriebene Verfahren zum Signalisieren einer möglichen Kollision weiter. Es wird also durch eine Umfeldsensorik eine Verzögerungsbeschleunigung eines dem Kraftfahrzeug vorausfahrenden Fremdfahrzeugs erfasst. Diese erfasste oder gemessene Verzögerungsbeschleunigung wird im Folgenden als tatsächliche Verzögerungsbeschleunigung bezeichnet. Die tatsächliche Verzögerungsbeschleunigung ist z.B. ein digitales oder analoges Signal, das einen Messwert oder eine zeitlich nacheinander ermittelte Reihe von Messwerten umfasst, von denen jeder die zu einem vorgegebenen jeweiligen Zeitpunkt gemessene Verzögerungsbeschleunigung des Fremdfahrzeugs angibt.

In Abhängigkeit von dieser erfassten tatsächlichen Verzögerungsbeschleunigung wird ein Prädiktionssignal ermittelt, das dazu ausgelegt ist, auf eine Kollisionsgefahr des Kraftfahrzeugs hinzuweisen, also eine Kollisionsgefahr zu indizieren. Beispielsweise kann das Prädiktionssignal eine Vermeidungsbeschleunigung angeben, also diejenige Vermeidungsbeschleunigung, welche die Kollision mit dem Fremdfahrzeug gerade noch vermeidet. Das Prädiktionssignal wird durch eine Prädiktionseinrichtung ermittelt, die beispielsweise durch ein Steuergerät bereitgestellt sein kann oder beispielsweise auch als ein Programmmodul eines Steuergeräts oder einer anderen Prozessoreinrichtung des Kraftfahrzeugs realisiert sein kann. Dem Prädiktionssignal können natürlich noch weitere Messwerte betreffend das Fremdfahrzeug zugrunde gelegt sein, wie z.B. Abstand zum eigenen Fahrzeug und eine Relativgeschwindigkeit.

Falls das Prädiktionssignal ein vorbestimmtes Gefahrenkriterium erfüllt, so wird durch eine Steuereinrichtung ein Auslösesignal erzeugt, welches dann beispielsweise eine Warneinrichtung des Kraftfahrzeugs aktiviert, so dass der Fahrer des Kraftfahrzeugs gewarnt wird. Das Gefahrenkriterium kann beispielsweise besagen, dass die Vermeidungsbeschleunigung größer als ein vorbestimmter Schwellenwert ist. Als Prädiktionseinrichtung und Steuereinrichtung kann jeweils eine aus dem Stand der Technik bereits bekannte Einrichtung verwendet werden. Insbesondere kann auch ein anderes Prädiktionssignal als die Vermeidungsbeschleunigung und entsprechend auch ein anderes Gefahrenkriterium zugrunde gelegt sein, wie sie an sich aus dem Stand der Technik bekannt sind. Das erfindungsgemäße Verfahren ist unabhängig vom eigentlichen Verfahren zur Ermittlung der Kollisionsgefahr.

Die Erfindung sieht nämlich nun vor, dass die Prädiktionseinrichtung nicht die tatsächliche Verzögerungsbeschleunigung direkt analysiert, um das Prädiktionssignal zu ermitteln, sondern eine aus der tatsächlichen Verzögerungsbeschleunigung gebildete, transformierte oder umgewandelte oder skalierte Verzögerungsbeschleunigung. Hierzu ist eine Skalierungseinrichtung bereitgestellt, in der eine vorbestimmte Zuordnungsvorschrift gespeichert sein kann, mittels welcher das Umwandeln durchgeführt wird. Durch die Zuordnungsvorschrift wird insbesondere erreicht, dass zumindest zeitweise die skalierte Verzögerungsbeschleunigung betragsmäßig kleiner als die tatsächliche Verzögerungsbeschleunigung ist. Diese skalierte Verzögerungsbeschleunigung wird dann insbesondere anstelle der tatsächlichen Verzögerungsbeschleunigung als ein Eingangssignal der Prädiktionseinrichtung zugeführt, so dass diese das Prädiktionssignal betreffend die Kollisionsgefahr des eigenen Kraftfahrzeugs aus der skalierten Verzögerungsbeschleunigung ermittelt. Die Zuordnungsvorschrift ist nicht konstant, sondern verändert sich dahingehend, dass sie in Abhängigkeit von zumindest einem Fahrdynamikwert des Fremdfahrzeugs eingestellt wird. Mit anderen Worten wird durch den zumindest einen Fahrdynamikwert des Fremdfahrzeugs insbesondere festgelegt, um wie viel kleiner die skalierte Verzögerungsbeschleunigung im Verhältnis zur tatsächlichen Verzögerungsbeschleunigung ist.

Das erfindungsgemäße Verfahren weist den Vorteil auf, dass der Prädiktionseinrichtung bei einem kurzen, aber verhältnismäßig starken Abbremsen des vorausfahrenden Fremdfahrzeugs nicht diese tatsächliche Verzögerungsbeschleunigung zugeführt wird, sondern die kleinere, skalierte Verzögerungsbeschleunigung, so dass hierdurch das Auslösen einer Kollisionswarnung oder sogar einer Selbstbremsung des Kraftfahrzeugs vermieden wird.

Zu der Erfindung gehört auch ein entsprechendes Kraftfahrzeug, mittels welchem das beschriebene erfindungsgemäße Verfahren durchgeführt werden kann. Das Kraftfahrzeug weist hierzu die beschriebene Umfeldsensorik, die Prädiktionseinrichtung und die mit der Prädiktionseinrichtung gekoppelte Steuereinrichtung zum Erzeugen des Auslösesignals auf. Erfindungsgemäß ist die Umfeldsensorik mit der Prädiktionseinrichtung über die Skalierungseinrichtung gekoppelt, welche also die von der Umfeldsensorik ermittelte tatsächliche Verzögerungsbeschleunigung mittels der Zuordnungsvorschrift in Abhängigkeit von zumindest einem Fahrdynamikwert des Fremdfahrzeugs in die skalierte Verzögerungsbeschleunigung umwandelt und diese skalierte Verzögerungsbeschleunigung als Eingangssignal an die Prädiktionseinrichtung weitergibt. Die Skalierungseinrichtung kann hierzu z.B. als ein Programmmodul realisiert sein.

Im Folgenden werden Merkmale von Weiterbildungen der Erfindung beschrieben, wobei diese Merkmale sowohl das erfindungsgemäße Verfahren als auch das erfindungsgemäße Kraftfahrzeug weiterbilden.

So betreffen einige Weiterbildungen den zumindest einen Fahrdynamikwert, der verwendet wird, um die Zuordnungsvorschrift zum Ermitteln der skalierten Verzögerungsbeschleunigung einzustellen.

Eine dieser Weiterbildungen sieht vor, dass der zumindest eine Fahrdynamikwert einen Zeitdauerwert umfasst, der angibt, wie lange schon die Verzögerungsbeschleunigung des vorausfahrenden Fremdfahrzeugs betragsmäßig durchgehend über einem vorbestimmten Mindestwert liegt. Mit anderen Worten wird die seit dem Beginn eines Bremsvorganges des Fremdfahrzeugs vergangene Zeit gemessen. Durch die Skalierungseinrichtung wird dann die skalierte Verzögerungseinrichtung mit zunehmendem Zeitdauerwert der tatsächlichen Verzögerungsbeschleunigung angenähert. Mit anderen Worten wird die skalierte Verzögerungsbeschleunigung im Verhältnis zur tatsächlichen Verzögerungsbeschleunigung immer größer, je länger der Bremsvorgang andauert, bis die skalierte Verzögerungsbeschleunigung bevorzugt gleich der tatsächlichen Verzögerungsbeschleunigung ist. Hierdurch wird in vorteilhafter Weise der Annahme Rechnung getragen, dass, wenn der Fahrer für eine gewisse Mindestzeitdauer bremst, er höchst wahrscheinlich auch einen ernsthaften Grund, wie beispielsweise vorausliegende Gefahr, dafür hat. Das Annähern der skalierten Verzögerungsbeschleunigung an die tatsächliche Verzögerungsbeschleunigung kann kontinuierlich oder stufenweise erfolgen.

Gemäß einer anderen Weiterbildung weist der zumindest eine Fahrdynamikwert zumindest einen konkreten Beschleunigungswert aus der Verzögerungsbeschleunigung selbst auf. Mit anderen Worten wird also die Höhe oder der Betrag der Verzögerung des Fremdfahrzeugs berücksichtigt. Hierzu wird durch die Skalierungseinrichtung ein Verhältnis der skalierten Verzögerungsbeschleunigung zur tatsächlichen Verzögerungsbeschleunigung umso größer eingestellt, je größer der zumindest eine Beschleunigungswert betragsmäßig ist. Bremst also das Fremdfahrzeug sehr stark, so ist die skalierte Verzögerungsbeschleunigung im Verhältnis größer als für den Fall, dass das Fremdfahrzeug weniger stark bremst. Auch hier kann die Zuordnungsvorschrift kontinuierlich oder stufenweise in Abhängigkeit von dem Beschleunigungswert der Verzögerungsbeschleunigung eingestellt werden. Der zumindest eine Beschleunigungswert kann jeweils z.B. ein einzelner Momentanwert oder ein statistischer Mittelwert aus mehreren Momentanwerten sein.

Bei einer anderen Weiterbildung weist der zumindest eine Fahrdynamikwert zumindest einen Wert für einen Geschwindigkeitsabbau auf. Mit anderen Worten wird also ermittelt, inwieweit eine Fahrgeschwindigkeit des Fremdfahrzeugs bereits durch den gerade von der Umfeldsensorik beobachten Bremsvorgang bereits reduziert worden ist. Durch die Skalierungseinrichtung wird dann die skalierte Verzögerungsbeschleunigung mit zunehmendem Geschwindigkeitsabbau der tatsächlichen Verzögerungsbeschleunigung angenähert. Je mehr also das Fremdfahrzeug zum Stillstand gebracht ist, desto stärker wird der Einfluss der tatsächlichen Verzögerungsbeschleunigung in der Prädiktionseinrichtung. In einer Weiterbildung der Erfindung ist vorgesehen, den Geschwindigkeitsabbau nur für den Fall zu berücksichtigen, dass die Verzögerungsbeschleunigung des vorausfahrenden Fremdfahrzeugs betragsmäßig über einem vorbestimmten Mindestwert liegt. Mit anderen Worten wird der Geschwindigkeitsabbau erst ab oder oberhalb einer gewissen Verzögerungsschwelle gemessen.

Eine andere Weiterbildung sieht vor, dass der zumindest eine Fahrdynamikwert zumindest einen relativen Fahrdynamikwert umfasst. Mit anderen Worten wird hier auch die Fahrdynamik des Eigenfahrzeugs, also des eigenen Kraftfahrzeugs, berücksichtigt. So ist zum einen insbesondere vorgesehen, dass aus der genannten tatsächlichen Verzögerungsbeschleunigung des Fremdfahrzeugs und einer Eigenverzögerungsbeschleunigung des eigenen Kraftfahrzeugs zumindest ein relativer Fahrdynamikwert gebildet wird. Zusätzlich oder alternativ dazu kann vorgesehen sein, dass aus einer Fahrgeschwindigkeit des Fremdfahrzeugs und einer Eigenfahrgeschwindigkeit des Kraftfahrzeugs ein relativer Fahrdynamikwert gebildet wird. Entsprechend kann eine relativer Fahrdynamikwert auf Grundlage eines Geschwindigkeitsabbaus gebildet werden. Durch einen relativen Fahrdynamikwert ergibt sich der Vorteil, dass die Fahrsituation des eigenen Kraftfahrzeugs mit berücksichtigt wird.

Die beschriebenen Weiterbildungen betreffen die verwendeten Fahrdynamikwerte zum Umwandeln der tatsächlichen Verzögerungsbeschleunigung in die skalierte Verzögerungsbeschleunigung, können natürlich auch kombiniert werden.

Eine andere Weiterbildung der Erfindung sieht vor, dass zumindest zeitweise die skalierte Verzögerungsbeschleunigung betragsmäßig auch größer als die tatsächliche Verzögerungsbeschleunigung eingestellt wird. Bei einigen Typen von Prädiktionseinrichtung werden nämlich Werte aus dem Eingangssignal akkumuliert, also beispielsweise wird ein gleitender Mittelwert der skalierten Verzögerungsbeschleunigung gebildet. Diese Akkumulation der skalierten Verzögerungsbeschleunigung führt zu einer Reaktionsträgheit der Prädiktionseinrichtung beim Erzeugen des Auslösesignals. Diese kann in vorteilhafter Weise durch übergroße Eingangswerte kompensiert werden, ohne dass die Prädiktionseinrichtung baulich verändert werden muss.

Eine besonders geeignete Zuordnungsvorschrift für das Bilden der skalierten Verzögerungsbeschleunigung ergibt sich gemäß einer Weiterbildung der Erfindung, indem die Skalierungseinrichtung die tatsächliche Verzögerungsbeschleunigung mit einem Gewichtungsfaktor multipliziert, wobei der Gewichtungsfaktor in Abhängigkeit von dem zumindest einen Fahrdynamikwert eingestellt wird. Hierdurch ergibt sich der Vorteil, dass durch den Multiplikator und den Gewichtungsfaktor die Signalübertragung von der Umfeldsensorik hin zur Prädiktionseinrichtung nur an einer einzelnen Stelle verändert oder beeinflusst werden muss, um das erfindungsgemäße Verfahren in einem herkömmlichen Kraftfahrzeug umsetzen zu können. Der Gewichtungsfaktor weist insbesondere einen Wert in einem Bereich von 0 bis 1 auf, um die beschriebene Skalierung auf einen Wert kleiner als die tatsächliche Verzögerungsbeschleunigung einzustellen.

Wie bereits ausgeführt, kann die Zuordnungsvorschrift in der Skalierungseinrichtung gespeichert sein. Geeignete Formen sind hierbei eine parametrierte Funktion und/oder eine Kennlinie und/oder ein Kennfeld.

Andere Weiterbildungen der Erfindung reduzieren in vorteilhafter Weise das Risiko eines Fehlalarms noch weiter.

Eine dieser Weiterbildungen sieht vor, dass die Steuereinrichtung das Auslösesignal nur erzeugt, falls die tatsächliche Verzögerungsbeschleunigung größer als eine vorbestimmte Verzögerungsschwelle ist. Mit anderen Worten reagiert das beschriebene System nur dann, wenn das vorausfahrende Fremdfahrzeug besonders stark bremst, wobei hier die Verzögerungsschwelle die Reaktionsschwelle festlegt. Die Verzögerungsschwelle gibt dabei bevorzugt einen Bereich vor, der außerhalb einer Komfortbeschleunigung liegt, wie sie bei gefahrlosen Fahrmanövern in der Regel vorkommen. Beispielsweise kann die Verzögerungsschwelle in einem Bereich von -2 m/s² bis -3,5 m/s² liegen. Die hier angegebenen negativen Werte sind natürlich bei einer betragsmäßigen Betrachtung als positive Werte bereitgestellt.

Das Überwachen der Verzögerungsschwelle kann an unterschiedlichen Stellen geschehen. Es kann beispielsweise vorgesehen sein, dass bereits die Skalierungseinrichtung für eine tatsächliche Verzögerungsbeschleunigung unterhalb der Verzögerungsschwelle einfach einen Wert von 0 als skalierte Verzögerungsbeschleunigung ausgibt. Es kann auch vorgesehen sein, dass die Prädiktionseinrichtung auf ein Eingangssignal unterhalb der Verzögerungsschwelle nicht reagiert. Schließlich kann auch die Steuereinrichtung selbst die tatsächliche Verzögerungsbeschleunigung überwachen und selbst das Auslösesignal unterdrücken.

Zusätzlich zur Überwachung der Verzögerungsschwelle wird gemäß einer Weiterbildung die Steuereinrichtung das Auslösesignal nur dann erzeugt, falls die tatsächliche Verzögerungsbeschleunigung länger als eine vorbestimmte Entprellzeitdauer durchgehend größer als die Verzögerungsschwelle ist. Hierdurch ergibt sich der Vorteil, dass auch ein verhältnismäßig kurzes, aber heftiges Anbremsen des Fremdfahrzeugs ignoriert wird. Die Entprellzeitdauer kann beispielsweise in einem Bereich von 500 Millisekunden bis 1 Sekunde liegen.

Ein weiterer Vorteil ergibt sich, wenn die Entprellzeitdauer in Abhängigkeit von der tatsächlichen Verzögerungsbeschleunigung und/oder dem zumindest einen Fahrdynamikparameter eingestellt wird. Mit anderen Worten reagiert die Steuereinrichtung dann schneller, wenn anhand der tatsächlichen Verzögerungsbeschleunigung und/oder dem zumindest einen Fahrdynamikparameter bereits innerhalb der Entprellzeitdauer eine Gefahrensituation erkannt wird. Die Entprellzeitdauer wird also z.B. kürzer oder sogar auf einen Wert von 0 eingestellt, falls die tatsächliche Verzögerungsbeschleunigung eine Vollbremsung oberhalb einer Vollbremsungsschwelle ist. Auch eine kontinuierliche oder gestufte Verkürzung der Entprellzeitdauer ist möglich.

Die Umfeldsensorik kann zum Erfassen der tatsächlichen Verzögerungsbeschleunigung einen Sensor oder mehrere Sensoren umfassen. Besonders geeignet sind hierzu ein Radarmodul und/oder eine Time-of-Flight-Kamera und/oder eine Videokamera und/oder ein Einzelbildkamera und/oder eine Stereokamera und/oder ein Lasersensor. Diese Aufzählung ist aber nicht als abschließend zu verstehen. Zusätzlich oder alternativ kann die Umfeldsensorik auf einem Car-2-Car-Empfangsmodul basieren. Hierdurch ergibt sich der Vorteil, dass nicht nur ein unmittelbar im Sichtfeld vorausfahrendes Fremdfahrzeug überwacht werden kann, sondern die tatsächliche Verzögerungsbeschleunigung auch von einem oder mehreren von vor dem eigenen Kraftfahrzeug hintereinander fahrenden Fremdfahrzeugen überwacht werden kann.

Wie bereits ausgeführt, kann durch die Steuereinrichtung mittels des Auslösesignals eine Warneinrichtung zum Warnen eines Fahrers des Kraftfahrzeugs aktiviert werden (Kollisionswarnung). Zusätzlich oder alternativ dazu kann aber auch mittels des Auslösesignals eine Interventionsmaßnahme ausgelöst werden, die unabhängig von dem Fahrer das Fahrverhalten des Kraftfahrzeugs beeinflusst. Hierzu kann eine Sicherheitskomponente zum fahrerunabhängigen Regeln oder Durchführen einer Längsführung und/oder einer Querführung des Kraftfahrzeugs angesteuert werden. So kann beispielsweise ein autonomes Ausweichmanöver oder eine Selbstbremsung ausgelöst werden.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: ein Diagramm mit einem schematisierten Kennfeld, das in einer Skalierungseinrichtung des Kraftfahrzeugs von Fig. 1 gespeichert sein kann.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

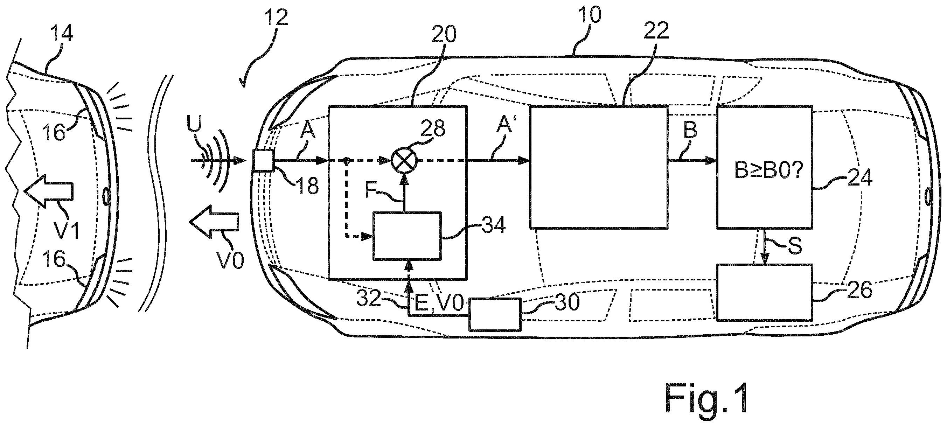

In Fig. 1 ist ein Kraftfahrzeug 10 gezeigt, bei dem es sich um eine Ausführungsform des erfindungsgemäßen Kraftfahrzeugs handelt. Das Kraftfahrzeug 10 kann beispielsweise ein Kraftwagen, insbesondere ein Personenkraftwagen, sein. Das Kraftfahrzeug fährt auf einer (nicht näher dargestellten) Straße 12 mit einer Eigenfahrgeschwindigkeit oder Eigengeschwindigkeit V0.

In Fahrtrichtung vor dem Kraftfahrzeug 10 kann ein Fremdfahrzeug 14 fahren, von dem in Fig. 1 nur das Heck dargestellt ist. Für das der Fig. zugrundeliegende Beispiel sei angenommen, dass das Fremdfahrzeug 14 mit einer Fahrgeschwindigkeit V1 vor dem Kraftfahrzeug 10 fährt. Das Fremdfahrzeug 14 verzögert dabei seine Fahrgeschwindigkeit V1, das heißt es wird gebremst. Dies ist in Fig. 1 durch leuchtende Bremslichter 16 symbolisiert.

Bei dem Kraftfahrzeug 10 wird zuverlässig unterschieden, ob es sich um ein länger andauerndes, für den (nicht dargestellten) Fahrer des Kraftfahrzeugs 10 gefährliches Bremsmanöver des Fremdfahrzeugs 14 oder nur um ein verhältnismäßig kurzes, ungefährliches Abbremsen des Fremdfahrzeugs 14 handelt. Entsprechend wird der Fahrer des Kraftfahrzeugs 10 dann gewarnt oder nicht.

Das Kraftfahrzeug 10 kann hierzu eine Umfeldsensorik 18, eine Skalierungseinrichtung 20, eine Prädiktionseinrichtung 22, eine Steuereinrichtung 24 und eine oder mehrere Sicherheitskomponenten 26 umfassen. Die Einrichtungen 20, 22, 24 können als ein Steuergerät oder eine Gruppe von mehreren Steuergeräten bereitgestellt sein. Die Einrichtungen 20, 22, 24 können auch Programmmodule in einem oder mehreren Steuergeräten oder einer oder mehrerer Prozessoreinrichtungen des Kraftfahrzeugs 10 sein. Die Umfeldsensorik 18, die Prädiktionseinrichtung 22, die Steuereinrichtung 24 und die Sicherheitskomponenten 26 können dabei in an sich aus dem Stand der Technik bekannter Weise ausgestaltet sein.

Die Umfeldsensorik 18 kann ein von dem Fremdfahrzeug 14 ausgehendes Umfeldsignal U erfassen. Beispielsweise kann die Umfeldsensorik 18 ein Radar-Modul umfassen, durch welches als das Umfeldsignal U ein von dem Fremdfahrzeug 14 reflektiertes Radarsignal des Radar-Moduls erfasst wird. Die Umfeldsensorik 18 kann auch ein Car-2-Car-Empfangsmodul und/oder eine Time-of-Flight-Kamera umfassen. Zusätzlich oder alternativ dazu können für die Umfeldsensorik 18 auch andere Sensortechnologien zugrunde gelegt sein, beispielsweise eine oder mehrere der bereits weiter oben genannten. Die Umfeldsensorik 18 ermittelt aus dem Umfeldsignal U eine Bremsbeschleunigung oder Verzögerungsbeschleunigung A des Fremdfahrzeugs 14. Die Verzögerungsbeschleunigung A kann beispielsweise ein aus aufeinanderfolgenden Messwerte gebildetes digitales Messsignal der Verzögerungsbeschleunigung des Fremdfahrzeugs 14 darstellen. Die Verzögerungsbeschleunigung A wird an die Skalierungseinrichtung 20 übertragen.

Durch die Skalierungseinrichtung 20 wird aus der Verzögerungsbeschleunigung A eine skalierte Verzögerungsbeschleunigung A' gebildet, welche an die Prädiktionseinrichtung übertragen wird.

Die Prädiktionseinrichtung 22 ermittelt aus der skalierten Verzögerungsbeschleunigung A eine Vermeidungsbeschleunigung B, welche angibt, wie stark das Kraftfahrzeug 10 selbst entschleunigt oder abgebremst werden müsste, damit das Kraftfahrzeug 10 nicht auf das Fremdfahrzeug 14 auffährt, wenn dieses die derzeitige Verzögerungsbeschleunigung aufrecht erhält, wobei natürlich die Steuereinrichtung 22 die skalierte Verzögerungsbeschleunigung A' zugrundelegt. Die Vermeidungsbeschleunigung B stellt ein Prädiktionssignal der Prädiktionseinrichtung 22 dar. Die Prädiktionseinrichtung 22 kann dabei dazu ausgelegt sein, bestimmungsgemäß die tatsächliche Verzögerungsbeschleunigung A zu verarbeiten. Durch die Skalierungseinrichtung 20 wird der Prädiktionseinrichtung 22 also eine andere Verzögerungsbeschleunigung "vorgetäuscht".

Die Vermeidungsbeschleunigung B wird an die Steuereinrichtung 24 übergeben, welche überprüft, ob die Vermeidungsbeschleunigung B ein vorbestimmtes Gefahrenkriterium erfüllt. Beispielsweise kann überprüft werden, ob die Vermeidungsbeschleunigung B gleich oder größer einem vorbestimmten Schwellenwert B0 ist. Aus dem Stand der Technik sind Steuereinrichtungen mit anderen Gefahrenkriterien bekannt, die hier ebenfalls verwendbar sind. Ist das Gefahrenkriterium erfüllt, so wird durch die Steuereinrichtung 24 ein Steuersignal S erzeugt, was an die Sicherheitskomponenten 26 ausgegeben werden kann. Beispielsweise können die Sicherheitskomponenten eine Warnanzeige für den Fahrer umfassen und/oder eine Selbstbremsung des Kraftfahrzeugs 10 auslösen, falls das Steuersignal S erzeugt wird.

Die Skalierungseinrichtung 20 kann derart ausgestaltet sein, dass sie zum Erzeugen der skalierten Verzögerungsbeschleunigung A' die Verzögerungsbeschleunigung A mit einem Skalierungsfaktor F mittels einer Multiplikationseinrichtung 28 multipliziert, also z.B. einer digitalen Multiplikation. Der Skalierungsfaktor F kann beispielsweise in einem Intervall von 0 bis 1 liegen. Der Skalierungsfaktor F kann beispielsweise in Abhängigkeit von der Verzögerungsbeschleunigung A selbst und/oder von der Eigengeschwindigkeit V0 oder einer Eigenbeschleunigung E des Kraftfahrzeugs 10 ermittelt werden. Die Eigengeschwindigkeit V0 und/oder die Eigenbeschleunigung E können hierbei von einem Steuergerät 30 des Kraftfahrzeugs 10 beispielsweise über einen Kommunikationsbus 32 an die Skalierungseinrichtung 20 übertragen werden. Das Abbilden der Eingangswerte, das heißt beispielsweise der Verzögerungsbeschleunigung A und/oder der Eigengeschwindigkeit V0 und/oder der Eigenbeschleunigung E auf einem Skalierungsfaktor F wird durch eine Zuordnungsvorschrift 34 realisiert.

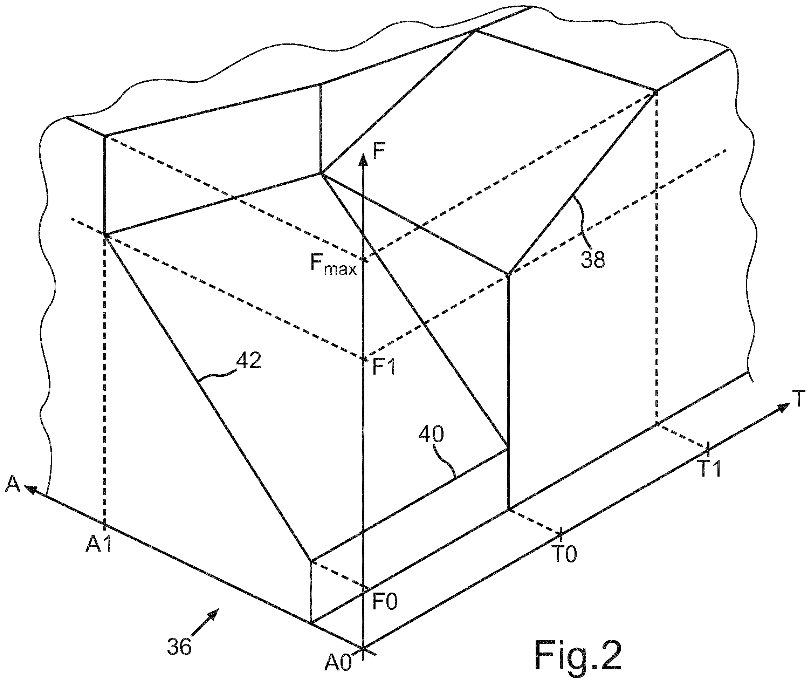

Die Zuordnungsvorschrift 34 kann beispielsweise ein Kennfeld 36 umfassen, wie es beispielhaft in Fig. 2 veranschaulicht ist. In Fig. 2 ist beispielhaft dargestellt, wie der Skalierungsfaktor F in Abhängigkeit von einer Zeitdauer T und der betragsmäßigen Verzögerungsbeschleunigung A eingestellt werden kann. Beispielsweise kann vorgesehen sein, dass für eine Verzögerungsbeschleunigung A kleiner als eine Verzögerungsschwelle A0 eine, mehrere oder alle Einrichtungen 20, 22, 24 überhaupt nicht reagieren, das heißt das Steuersignal S nicht erzeugt wird. Für eine Verzögerungsbeschleunigung A = A0 kann vorgesehen sein, dass für eine Entprellzeitdauer T0 ein verhältnismäßig geringer Skalierungsfaktor F0 eingestellt wird. Ein beispielhafter Wert für den Skalierungsfaktor F0 kann 0,2 sein. Dauert die Verzögerungsbeschleunigung A länger als die Anfangszeitdauer T0 an, so wird der Skalierungsfaktor beispielhaft stufenweise auf einen größeren Skalierungsfaktor F1 eingestellt, der beispielsweise 0,7 betragen kann. Es kann auch vorgesehen sein, den Skalierungsfaktor F progressiv beispielsweise gemäß einer Rampenfunktion 38 zu erhöhen, beispielsweise auf einen maximalen Skalierungswert Fₘₐₓ. Der maximale Skalierungsfaktor Fₘₐₓ kann beispielsweise den Wert 1 aufweisen.

Zusätzlich oder alternativ kann vorgesehen sein, dass der Skalierungsfaktor F auch in Abhängigkeit von der Höhe der Verzögerungsbeschleunigung A eingestellt wird. Für die Verzögerungsbeschleunigung A > A0 kann beispielsweise stufenweise oder, wie in Fig. 2 gezeigt, kontinuierlich progressiv der Skalierungsfaktor F ebenfalls vergrößert werden. Es kann vorgesehen sein, dass für den Fall, dass die Verzögerungsbeschleunigung A eine Vollbremsungsschwelle A1 überschreitet, stufenförmig oder sprunghaft auf den maximalen Skalierungsfaktor Fₘₐₓ umgeschaltet wird, da sicher ist, dass das Fremdfahrzeug eine Vollbremsung durchführt und die Prädiktionseinrichtung 22 dann mit der tatsächlichen Verzögerungsbeschleunigung A als Eingangssignal betrieben werden sollte.

Die in Fig. 1 und Fig. 2 beschriebene Zuordnungsvorschrift 34 ist nur beispielhaft. Im Folgenden sind weitere mögliche, mittels des erfindungsgemäßen Kraftfahrzeugs realisierbare Ausführungsformen zur Veranschaulichung beschrieben. Grundsätzlich wird angenommen, dass der Fahrer des Fremdfahrzeugs nur in Notsituationen außerhalb eines Komfortbereichs bremst, also die Verzögerungsbeschleunigung oberhalb eines bei alltäglichen, ungefährlichen Fahrmanövern vorkommenden Beschleunigungswerten liegt, also z.B. betragsmäßig bei A0 oder darüber. Kurzfristig kann aber eine Verzögerungsbeschleunigung auch außerhalb des Komfortbereichs liegen, ohne dass tatsächlich eine Notsituation vorliegt. Bremst das vorausfahrende Fremdfahrzeug 14 jedoch länger außerhalb des Komfortbereichs, ist es sehr wahrscheinlich, dass eine Kollisionssituation vorliegt.

Daher wird der Einfluss des Verhaltens des vorausfahrenden Fremdfahrzeugs auf die ermittelte Vermeidungsbeschleunigung B durch beispielsweise die Attribute Höhe der Verzögerungsbeschleunigung A und/oder Dauer der Verzögerungsbeschleunigung A geschätzt. Hierbei gilt dann die Annahme, dass, wenn der Fahrer für eine gewisse Zeit außerhalb des Komfortbereichs bremst, er höchst wahrscheinlich einen ernsthaften Grund, wie eine vorausliegende Gefahr, dafür haben wird und weiter verzögern wird. Bremst er dagegen nur kurzzeitig außerhalb des Komfortbereichs, kann noch nicht sicher auf eine Gefahr geschlossen werden und die Verzögerungsbeschleunigung A sollte einen geringeren Einfluss auf die Berechnung der Vermeidungsbeschleunigung B haben.

Somit ergibt sich als eine Umsetzungsmöglichkeit, dass der Einfluss der Verzögerung des vorausfahrenden Fremdfahrzeugs über einen konstanten Skalierungsfaktor F reduziert wird, also F * A. F kann hierbei beispielsweise 0,2 betragen. Bremst der Fahrer dann für mehr als die Anfangszeit oder Entprellzeit T0, also beispielsweise mehr als 800 Millisekunden, mit mehr als der Mindestverzögerung A0, also beispielsweise stärker als betragsmäßig 2,5 m/s², so wird der Skalierungsfaktor F erhöht, beispielsweise auf einen Wert F1, wie etwa 0,7. Die Auslegung des Faktors kann über eine Kennlinie 40 über der Verzögerungsdauer T festgelegt werden, wie sie auch Bestandteil des Kennfelds 36 sein kann.

Weiterhin ist eine Anpassung des Einflussfaktors, also z.B. des Skalierungsfaktors F, über eine Kennlinie 42 über der Verzögerungshöhe des Fremdfahrzeugs 14 möglich. Die in Fig. 2 veranschaulichte Kennlinie über der Verzögerungshöhe, also des Betrages der Verzögerungsbeschleunigung A, ist dabei nur beispielhaft.

Zusätzlich oder alternativ dazu kann auch die relative Verzögerungshöhe, also A / E, zugrunde gelegt werden. Es kann auch der Geschwindigkeitsabbau des Fremdfahrzeugs zugrunde gelegt werden. Hierbei kann jederzeit auch die Verzögerungsschwelle A0 zum robusteren Detektieren einer Gefahrensituation zugrunde gelegt werden. Darüber hinaus kann eine Anpassung durch eine Kombination der genannten Einflussfaktoren erzielt werden.

Durch die erfindungsgemäße Maßnahme ergibt sich ein früher Warnzeitpunkt des Fahrers, das heißt eine frühe Erzeugung des Steuersignals S ab dem Beginn des Bremsvorgangs des Fremdfahrzeugs 14, also ab T=0, bei solchen Situationen, die auch tatsächlich kritisch sind. Dagegen werden als unkritisch einzustufende zeitlich kurze Bremsvorgänge derart verarbeitet, dass sie keine Fehlauslösung des Steuersignals S erzeugen. Indem die Skalierungseinrichtung 20 der Prädiktionseinrichtung 22 vorgeschaltet sein kann, kann die Erfindung auch mit herkömmlichen Komponenten realisiert werden. Die Skalierungseinrichtung 20 kann aber auch in die Prädiktionseinrichtung 22 integriert sein.

Insgesamt ist durch das Beispiel gezeigt, wie mittels der Erfindung der Einfluss der Objektverzögerung des Fremdfahrzeugs auf den Kollisions-Warnzeitpunkt mittels des Skalierungsfaktors F variiert werden kann.

## Patentansprüche

1. Verfahren zum Betreiben eines Kraftfahrzeugs (10), um eine mögliche Kollision zu signalisieren, indem
eine Umfeldsensorik (18) eine tatsächliche Verzögerungsbeschleunigung (A) eines dem Kraftfahrzeug (10) vorausfahrenden Fremdfahrzeugs (14) erfasst,
eine Prädiktionseinrichtung (22) in Abhängigkeit von der erfassten tatsächlichen Verzögerungsbeschleunigung (A) ein Prädiktionssignal (B) für eine Kollisionsgefahr des Kraftfahrzeugs (10) ermittelt und
eine Steuereinrichtung (24) ein Auslösesignal (S) erzeugt, falls das Prädiktionssignal (B) ein vorbestimmtes Gefahrenkriterium (B0) erfüllt,
**dadurch gekennzeichnet, dass**
eine Skalierungseinrichtung (20) die tatsächliche Verzögerungsbeschleunigung (A) mittels einer vorbestimmten Zuordnungsvorschrift (34) in Abhängigkeit von zumindest einem Fahrdynamikwert (A, T) des Fremdfahrzeugs (14) in eine skalierte Verzögerungsbeschleunigung (A') umwandelt, die zumindest zeitweise betragsmäßig kleiner als die tatsächliche Verzögerungsbeschleunigung (A) ist, und
der Prädiktionseinrichtung (22) die skalierte Verzögerungsbeschleunigung (A') als ein Eingangssignal für das Ermitteln des Prädiktionssignals (B) zugeführt wird.

2. Verfahren nach Anspruch 1, wobei die Prädiktionseinrichtung (22) eine betragsmäßig minimale, die Kollision mit dem Fremdfahrzeug (14) vermeidende Vermeidungsbeschleunigung (B) des Kraftfahrzeugs (10) als das Prädiktionssignal (B) ermittelt und das Gefahrenkriterium (B0) vorgibt, dass die Vermeidungsbeschleunigung (B) größer als ein vorbestimmter Schwellenwert (B0) ist.

3. Verfahren nach einem der vorhergehenden Ansprüche, wobei der zumindest eine Fahrdynamikwert (T) einen Zeitdauerwert (T) umfasst, der angibt, wie lange schon die Verzögerungsbeschleunigung (A) betragsmäßig durchgehend über einem vorbestimmten Mindestwert (A0) liegt, und durch die Skalierungseinrichtung (20) die skalierte Verzögerungsbeschleunigung (A') mit zunehmendem Zeitdauerwert (T) der tatsächlichen Verzögerungsbeschleunigung (A) angenähert wird.

4. Verfahren nach einem der vorhergehenden Ansprüche, wobei der zumindest eine Fahrdynamikwert (A) zumindest einen Beschleunigungswert der Verzögerungsbeschleunigung (A) selbst umfasst und durch die Skalierungseinrichtung (20) ein Verhältnis der skalierten Verzögerungsbeschleunigung (A') zu der tatsächlichen Verzögerungsbeschleunigung (A) um so größer eingestellt wird, je größer der zumindest eine Beschleunigungswert betragsmäßig ist.

5. Verfahren nach einem der vorhergehenden Ansprüche, wobei der zumindest eine Fahrdynamikwert (A) zumindest einen relativen Fahrdynamikwert umfasst, welcher jeweils a) aus der tatsächlichen Verzögerungsbeschleunigung (A) und einer Eigenverzögerungsbeschleunigung (E) des Kraftfahrzeugs (10) und/oder b) aus einer Fahrgeschwindigkeit (V1) des Fremdfahrzeugs (14) und einer Eigenfahrgeschwindigkeit (V0) des Kraftfahrzeugs (10) gebildet ist.

6. Verfahren nach einem der vorhergehenden Ansprüche, wobei der zumindest eine Fahrdynamikwert zumindest einen Wert für einen Geschwindigkeitsabbau umfasst, wobei der Geschwindigkeitsabbau eine durch die tatsächliche Verzögerungsbeschleunigung (A) insgesamt bereits bewirkte Reduktion einer Fahrgeschwindigkeit (V1) des Fremdfahrzeugs (14) angibt, und durch die Skalierungseinrichtung (20) die skalierte Verzögerungsbeschleunigung (A') mit zunehmendem Geschwindigkeitsabbau der tatsächlichen Verzögerungsbeschleunigung (A) angenähert wird.

7. Verfahren nach einem der vorhergehenden Ansprüche, wobei zumindest zeitweise die skalierte Verzögerungsbeschleunigung (A') betragsmäßig größer als tatsächliche Verzögerungsbeschleunigung (A) eingestellt wird.

8. Verfahren nach einem der vorhergehenden Ansprüche, wobei die Skalierungseinrichtung (20) zum Ermitteln der skalierten Verzögerungsbeschleunigung (A') die tatsächliche Verzögerungsbeschleunigung (A) mit einem Gewichtungsfaktor (F) multipliziert, wobei der Gewichtungsfaktor (F) in Abhängigkeit von dem zumindest einen Fahrdynamikwert (A, T) eingestellt wird.

9. Verfahren nach einem der vorhergehenden Ansprüche, wobei die Zuordnungsvorschrift (34) in der Skalierungseinrichtung (20) gespeichert ist und eine parametrierte Funktion und/oder eine Kennlinie (40, 42) und/oder ein Kennfeld (36) umfasst.

10. Verfahren nach einem der vorhergehenden Ansprüche, wobei die Steuereinrichtung (24) das Auslösesignal (S) nur erzeugt, falls die tatsächliche Verzögerungsbeschleunigung (A) größer als eine vorbestimmte Verzögerungsschwelle (A0) ist.

11. Verfahren nach Anspruch 10, wobei die Steuereinrichtung (24) das Auslösesignal (S) nur erzeugt, falls die tatsächliche Verzögerungsbeschleunigung (A) länger als eine vorbestimmte Entprellzeitdauer (T0) größer als die Verzögerungsschwelle (A0) ist.

12. Verfahren nach Anspruch 11, wobei die Entprellzeitdauer (T0) in Abhängigkeit von der tatsächlichen Verzögerungsbeschleunigung (A) und/oder dem zumindest einen Fahrdynamikparameter (A, T) eingestellt wird.

13. Verfahren nach einem der vorhergehenden Ansprüche, wobei die Steuereinrichtung (24) mittels des Auslösesignals (S) eine Warneinrichtung (26) zum Warnen eines Fahrers des Kraftfahrzeugs (10) und/oder eine Sicherheitskomponente (26) zum fahrerunabhängigen Durchführen einer Längsführung und/oder einer Querführung des Kraftfahrzeugs (10) ansteuert.

14. Kraftfahrzeug (10), welches aufweist:
- eine Umfeldsensorik (18) zum Erfassen einer tatsächlichen Verzögerungsbeschleunigung (A) eines dem Kraftfahrzeug (10) vorausfahrenden Fremdfahrzeugs (14),
- eine Prädiktionseinrichtung (22), die dazu ausgelegt ist, in Abhängigkeit von der erfassten tatsächlichen Verzögerungsbeschleunigung (A) ein Prädiktionssignal (B) für eine Kollisionsgefahr des Kraftfahrzeugs (10) zu ermitteln, und
- eine mit der Prädiktionseinrichtung (22) gekoppelte Steuereinrichtung (24) zum Erzeugen eines Auslösesignals (S), falls das Prädiktionssignal (B) ein vorbestimmtes Gefahrenkriterium (B0) erfüllt,
**gekennzeichnet durch**
eine Skalierungseinrichtung (20), über welche die Umfeldsensorik (18) mit der Prädiktionseinrichtung (22) gekoppelt ist und welche dazu ausgelegt ist, die tatsächliche Verzögerungsbeschleunigung (A) mittels einer vorbestimmten Zuordnungsvorschrift (34) in Abhängigkeit von zumindest einem Fahrdynamikwert (A, T) des Fremdfahrzeugs (14) in eine skalierte Verzögerungsbeschleunigung (A'), die zumindest zeitweise betragsmäßig kleiner als die tatsächliche Verzögerungsbeschleunigung (A) ist, umzuwandeln und die skalierte Verzögerungsbeschleunigung (A') als ein Eingangssignal an die Prädiktionseinrichtung (22) auszugeben.

15. Kraftfahrzeug (10) nach Anspruch 14, wobei die Umfeldsensorik (18) zum Erfassen der tatsächlichen Verzögerungsbeschleunigung (A) ein Radarmodul und/oder ein Car2Car-Empfangsmodul und/oder eine Time-of-Flight-Kamera und/oder eine Videokamera und/oder eine Einzelbildkamera und/oder eine Stereokamera und/oder einen Lasersensor aufweist.

## Claims

1. Method for operating a motor vehicle (10) in order to signal a possible collision, in that
a surroundings sensor system (18) senses an actual deceleration (A) of another vehicle (14) travelling ahead of the motor vehicle (10),
a prediction device (22) determines a prediction signal (B) for a risk of a collision of the motor vehicle (10) as a function of the sensed actual deceleration (A), and
a control device (24) generates a triggering signal (S) if the prediction signal (B) satisfies a predetermined risk criterion (B0),
**characterized in that**
by means of a predetermined assignment rule (34) a scaling device (20) converts the actual deceleration (A), as a function of at least one vehicle movement dynamics value (A, T) of the other vehicle (14) into a scaled deceleration (A') which is at least temporarily lower in absolute value than the actual deceleration (A), and the scaled deceleration (A') is fed to the prediction device (22) as an input signal for determining the prediction signal (B).

2. Method according to Claim 1, wherein the prediction device (22) determines a minimum absolute-value avoidance acceleration (B), which avoids the collision with the other vehicle (14), of the motor vehicle (10) as the prediction signal (B), and the risk criterion (B0) predefines that the avoidance acceleration (B) is higher than a predetermined threshold value (B0).

3. Method according to one of the preceding claims, wherein the at least one vehicle movement dynamics value (T) comprises a time period value (T) which indicates how long the deceleration (A) has already been continuously above a predetermined minimum value (A0) in absolute value, and the scaling device (20) approximates the scaled deceleration (A') to the actual deceleration (A) as the time period value (T) increases.

4. Method according to one of the preceding claims, wherein the at least one vehicle movement dynamics value (A) comprises at least one acceleration value of the deceleration (A) itself, and the scaling device (20) sets a ratio of the scaled deceleration (A') to the actual deceleration (A) to be higher, the higher the at least one acceleration value is in absolute value.

5. Method according to one of the preceding claims, wherein the at least one vehicle movement dynamics value (A) comprises at least one relative vehicle movement dynamics value which is respectively formed
a) from the actual deceleration (A) and a deceleration (E) of the motor vehicle (10) and/or
b) from a velocity (V1) of the other vehicle (14) and a velocity (V0) of the motor vehicle (10).

6. Method according to one of the preceding claims, wherein the at least one vehicle movement dynamics value comprises at least one value for a velocity reduction, wherein the velocity reduction indicates a reduction in a velocity (V1) of the other vehicle (14) which has already been brought about overall by the actual deceleration (A), and the scaling device (20) approximates the scaled deceleration (A') to the actual deceleration (A) with increasing velocity reduction.

7. Method according to one of the preceding claims, wherein the scaled deceleration (A') is set at least temporarily to be higher in absolute value than the actual deceleration (A).

8. Method according to one of the preceding claims, wherein the scaling device (20) for determining the scaled deceleration (A') multiplies the actual deceleration (A) by a weighting factor (F), wherein the weighting factor (F) is set as a function of the at least one vehicle movement dynamics value (A, T).

9. Method according to one of the preceding claims, wherein the assignment rule (34) is stored in the scaling device (20), and comprises a parameterized function and/or a characteristic curve (40, 42) and/or a characteristic diagram (36).

10. Method according to one of the preceding claims, wherein the control device (24) generates the triggering signal (S) only if the actual deceleration (A) is higher than a predetermined deceleration threshold (A0).

11. Method according to Claim 10, wherein the control device (24) generates the triggering signal (S) only if the actual deceleration (A) is higher than the deceleration threshold (A0) for longer than a predetermined debounce time period (T0).

12. Method according to Claim 11, wherein the debounce time period (T0) is set as a function of the actual deceleration (A) and/or the at least one vehicle movement dynamics parameter (A, T).

13. Method according to one of the preceding claims, wherein the control device (24) actuates, by means of the triggering signal (S), a warning device (26) for warning a driver of the motor vehicle (10) and/or a safety component (26) for driver-independent execution of a longitudinal guidance operation and/or a transverse guidance operation of the motor vehicle (10).

14. Motor vehicle (10) which has:
- a surroundings sensor system (18) for sensing an actual deceleration (A) of another vehicle (14) travelling ahead of the motor vehicle (10),
- a prediction device (22) which is configured to determine a prediction signal (B) for a risk of collision of the motor vehicle (10) as a function of the sensed actual deceleration (A), and
- a control device (24) which is coupled to the prediction device (22) and has the purpose of generating a triggering signal (S) if the prediction signal (B) satisfies a predetermined risk criterion (B0),
**characterized by**
a scaling device (20) by means of which the surroundings sensor system (18) is coupled to the prediction device (22) and which is configured to convert the actual deceleration (A), by means of a predetermined assignment rule (34) as a function of at least one vehicle movement dynamics value (A, T) of the other vehicle (14), into a scaled deceleration (A') which is at least temporarily lower in absolute value than the actual deceleration (A), and to output the scaled deceleration (A') as an input signal to the prediction device (22).

15. Motor vehicle (10) according to Claim 14, wherein the surroundings sensor system (18) has, for sensing the actual deceleration (A), a radar module and/or a car2car receiver module and/or a time-of-flight camera and/or a video camera and/or an individual image camera and/or a stereo camera and/or a laser sensor.

## Revendications

1. Procédé pour faire fonctionner un véhicule automobile (10) en vue de signaler une collision possible, en ce
qu'un système de détection d'environnement (18) acquiert une accélération négative effective (A) d'un véhicule tiers (14) qui précède le véhicule automobile (10),
qu'un dispositif de prédiction (22) détermine un signal de prédiction (B) pour un risque de collision du véhicule automobile (10) en fonction de l'accélération négative effective (A) acquise et
qu'un dispositif de commande (24) génère un signal de déclenchement (S) dans le cas où le signal de prédiction (B) remplit un critère de danger (B0) prédéfini,
**caractérisé en ce que**
un dispositif de mise à l'échelle (20) convertit l'accélération négative effective (A) en une accélération négative mise à l'échelle (A') au moyen d'une règle d'association (34) prédéfinie en fonction d'au moins une valeur de dynamique de conduite (A, T) du véhicule tiers (14), dont la valeur est au moins temporairement inférieure à l'accélération négative effective (A), et
l'accélération négative mise à l'échelle (A') est acheminée au dispositif de prédiction (22) en tant que signal d'entrée pour la détermination du signal de prédiction (B).

2. Procédé selon la revendication 1, le dispositif de prédiction (22) déterminant en tant que signal de prédiction (B) une accélération d'évitement (B) du véhicule automobile (10) dont la valeur est minimale et qui permet d'éviter la collision avec le véhicule tiers (14) et le critère de danger (B0) indiquant implicitement que l'accélération d'évitement (B) est supérieure à une valeur de seuil (B0) prédéfinie.

3. Procédé selon l'une des revendications précédentes, l'au moins une valeur de dynamique de conduite (T) comprenant une valeur de durée (T) qui indique depuis combien de temps l'accélération négative (A) se trouve déjà continuellement au-dessus d'une valeur minimale (A0) prédéfinie, et l'accélération négative mise à l'échelle (A') étant rapprochée de l'accélération négative effective (A) par le dispositif de mise à l'échelle (20) à mesure que la valeur de durée (T) augmente.

4. Procédé selon l'une des revendications précédentes, l'au moins une valeur de dynamique de conduite (A) comprenant au moins une valeur d'accélération de l'accélération négative (A) elle-même et un rapport entre l'accélération négative mise à l'échelle (A') et l'accélération négative effective (A) étant réglé d'autant plus grand par le dispositif de mise à l'échelle (20) que le montant de l'au moins une valeur d'accélération est élevé.

5. Procédé selon l'une des revendications précédentes, l'au moins une valeur de dynamique de conduite (A) comprenant au moins une valeur dynamique de conduite relative, laquelle est formée respectivement
a) de l'accélération négative effective (A) et d'une accélération négative propre (E) du véhicule automobile (10) et/ou
b) d'une vitesse de déplacement (V1) du véhicule tiers (14) et d'une vitesse de déplacement propre (V0) du véhicule automobile (10).

6. Procédé selon l'une des revendications précédentes, l'au moins une valeur de dynamique de conduite comprenant au moins une valeur pour une décroissance de vitesse, la décroissance de vitesse indiquant une réduction d'une vitesse de déplacement (V1) du véhicule tiers (14) globalement déjà provoquée par l'accélération négative effective (A), et l'accélération négative mise à l'échelle (A') étant rapprochée de l'accélération négative effective (A) par le dispositif de mise à l'échelle (20) à mesure que la décroissance de vitesse augmente.

7. Procédé selon l'une des revendications précédentes, la valeur de l'accélération négative mise à l'échelle (A') étant au moins temporairement réglée supérieure à l'accélération négative effective (A).

8. Procédé selon l'une des revendications précédentes, le dispositif de mise à l'échelle (20) multipliant l'accélération négative effective (A) par un facteur de pondération (F) en vue de déterminer la valeur de l'accélération négative mise à l'échelle (A'), le facteur de pondération (F) étant réglé en fonction de l'au moins une valeur de dynamique de conduite (A, T).

9. Procédé selon l'une des revendications précédentes, la règle d'association (34) étant mise en mémoire dans le dispositif de mise à l'échelle (20) et comprenant une fonction paramétrée et/ou une courbe caractéristique (40, 42) et/ou un diagramme caractéristique (36).

10. Procédé selon l'une des revendications précédentes, le dispositif de commande (24) ne générant le signal de déclenchement (S) que dans le cas où l'accélération négative effective (A) est supérieure à un seuil de ralentissement (A0) prédéfini.

11. Procédé selon la revendication 10, le dispositif de commande (24) ne générant le signal de déclenchement (S) que dans le cas où l'accélération négative effective (A) dure plus longtemps qu'une durée anti-battement (T0) prédéfinie supérieure au seuil de ralentissement (A0).

12. Procédé selon la revendication 11, la durée anti-battement (T0) étant réglée en fonction de l'accélération négative effective (A) et/ou de l'au moins un paramètre de dynamique de conduite (A, T).

13. Procédé selon l'une des revendications précédentes, le dispositif de commande (24) commandant, au moyen du signal de déclenchement (S), un dispositif d'alerte (26) destiné à alerter un conducteur du véhicule automobile (10) et/ou un composant de sécurité (26) destiné à effectuer un guidage longitudinal et/ou un guidage transversal du véhicule automobile (10) indépendamment du conducteur.

14. Véhicule automobile (10), lequel possède :
- un système de détection d'environnement (18) destiné à acquérir une accélération négative effective (A) d'un véhicule tiers (14) qui précède le véhicule automobile (10),
- un dispositif de prédiction (22) qui est conçu pour, en fonction de l'accélération négative effective (A) acquise, déterminer un signal de prédiction (B) pour un risque de collision du véhicule automobile (10), et
- un dispositif de commande (24) connecté au dispositif de prédiction (22) pour générer un signal de déclenchement (S) dans le cas où le signal de prédiction (B) remplit un critère de danger (B0) prédéfini,
**caractérisé par**
un dispositif de mise à l'échelle (20) par le biais duquel le système de détection d'environnement (18) est connecté au dispositif de prédiction (22) et qui est conçu pour convertir l'accélération négative effective (A) en une accélération négative mise à l'échelle (A') au moyen d'une règle d'association (34) prédéfinie en fonction d'au moins une valeur de dynamique de conduite (A, T) du véhicule tiers (14), dont la valeur est au moins temporairement inférieure à l'accélération négative effective (A), et délivrer l'accélération négative mise à l'échelle (A') au dispositif de prédiction (22) en tant que signal d'entrée.

15. Véhicule automobile (10) selon la revendication 14, le système de détection d'environnement (18) possédant, pour l'acquisition de l'accélération négative effective (A), un module radar et/ou un module de réception de véhicule à véhicule et/ou une caméra à temps de vol et/ou une caméra vidéo et/ou une caméra à prise de vue image par image et/ou une caméra stéréoscopique et/ou un capteur laser.
